Europäisches Patentamt

(19) European Patent Office

Office européen des brevets

(11) Numéro de publication: **0 237 415**
**B1**

(12) **FASCICULE DE BREVET EUROPEEN**

(45) Date de publication du fascicule du brevet:
19.12.90

(21) Numéro de dépôt: 87400472.4

(22) Date de dépôt: 04.03.87

(51) Int. Cl.⁵: **G01N 21/21**

(54) Dispositif d'ellipsométrie spectroscopique à fibres optiques.

(30) Priorité: 06.03.86 FR 8603188

(43) Date de publication de la demande:
16.09.87 Bulletin 87/38

(45) Mention de la délivrance du brevet:
19.12.90 Bulletin 90/51

(84) Etats contractants désignés:
CH DE GB LI

(56) Documents cités:
OPTICS COMMUNICATIONS,
vol. 8, no. 3, juillet 1983, pages 222-225, Amsterdam, NL;
D.E. ASPNES: "Fourier transform detection system for
rotating-analyzer ellipsometers"
IBM TECHNICAL DISCLOSURE BULLETIN,
vol. 18, no. 6, novembre 1975, page 2031, New York, US;
N.P. EDWARDS et al.: "Automated ellipsometer"
APPLIED OPTICS,
vol. 13, no. 8, août 1974, pages 1938-1945, New York, US;
J.R. ZEIDLER et al.: "Beam deviation errors in
ellipsometric measurements; an analysis"
FERROELECTRICS,
vol. 65, no. 3/4, 1985, pages 175-180, Gordon and Breach
Science Publishers, Inc, and OPA Ltd, Londres, GB; V.
AFANASJEV et al.: "The influence of surface layers on
the measured refractive index of ferroelectric materials

(73) Titulaire: **SOPRA - SOCIETE DE PRODUCTION ET DE
RECHERCHES APPLIQUEES, 68, rue Pierre-Joigneaux,
F-92270 Bois-Colombes(FR)**

(72) Inventeur: **Bernoux, Franck, 15, rue Lamartine,
F-75009 Paris(FR)**
Inventeur: **Stehle, Jean-Louis, 19, rue des Arts,
F-92700 Colombes(FR)**

(74) Mandataire: **Plaçais, Jean-Yves et al, Cabinet
Netter, 40, rue Vignon, F-75009 Paris(FR)**

(56) Documents cités: (suite)
studied by means of spectroscopic ellipsometry" 000
"Ellipsoméetrie spectroscopique", M.H. Debroux, Ph.
Ged, A. Vareille, l'Echo des Recherches no. 113, 3ème
trimestre 1983, pages 68-81.

ACTORUM AG

## Description

L'invention concerne l'ellipsométrie, qui permet des mesures relatives à l'état de surface d'un solide.

La réflexion sur un échantillon d'un faisceau lumineux introduit une modification de son état de polarisation, qui dépend de la structure de l'échantillon par l'intermédiaire des coefficients de réflexion parallèle (rp) et perpendiculaire (rs) au plan d'incidence.

On dispose alors de deux informations indépendantes qui sont le déphasage delta et le rapport des amplitudes tg psi des polarisations parallèles et perpendiculaires du faisceau réfléchi par l'échantillon. Ces paramètres ellipsométriques sont définis par :

$$\text{tg psi } e^{i \text{ delta}} = \frac{rp}{rs}$$

où e représente la fonction exponentielle, et i le vecteur unitaire imaginaire des nombres complexes.

Les propriétés optiques d'un matériau sont définies par ses indices réel (indice de réfraction n), et imaginaire, (coefficient d'absorption k). Pour une couche mince d'un matériau, un troisième paramètre caractérise ces propriétés optiques : l'épaisseur T. Pour caractériser un échantillon multi-couches, trois paramètres par couche sont nécessaires, plus les 2 indices du substrat. Il est alors nécessaire d'opérer à plusieurs longueurs d'ondes différentes, si l'on souhaite obtenir des informations sur tous les paramètres d'une surface multi-couches. De plus, le spécialiste sait, s'agissant de mesures fondées sur un phénomène périodique, qu'elles sont entrachées d'une ambiguité: la période optique de la couche.

Il faut donc répéter la mesure ellipsométrique pour plusieurs longueurs d'ondes différentes. Initialement,ceci a été fait à l'aide de faisceaux laser, et d'un filtre pour chaque longueur d'onde.

Plus récemment est apparue l'ellipsométrie spectroscopique, où la lumière émise est tirée d'une source à large bande, tandis que l'on utilise un monochromateur commandé en fréquence pour analyser différentes longueurs d'ondes s'étalant sur tout le spectre disponible. Un tel appareil est décrit dans l'article "Ellipsométrie spectroscopique" de M.H. Debroux, Ph. Ged, A. Vareille, l'Echo des Recherches N° 113, 3ème trimestre 1983, pages 61 à 68, ainsi que dans la notice due Centre National d'Etude des Télécommunications intitulée "Spectroscopic Ellipsometry", Edition 20.2.A/CMS du ler mars 1984, édité par le Centre Norbert Segard du CNET à Grenoble. On pourra se référer à ces documents pour mieux comprendre l'ellipsométrie spectroscopique.

Il apparaîtra aussi que l'ellipsométrie spectroscopique est particulièrement intéressante pour le suivi de la production de circuits intégrés, notamment en ses phases de diffusion gazeuse ou d'implantation ionique. Elle peut également être utilisée pour connaître de façon précise l'état de surface d'un solide, ou pour analyser un phénomène relatif à une telle surface, comme l'adsorption ou l'absorption chimique.

Ainsi, un appareil d'ellipsométrie spectroscopique connu comprend :

- une source lumineuse,
- un premier système optique, comprenant un polariseur, pour illuminer un échantillon sous incidence oblique, par un faisceau de lumière polarisée, collimatée par diaphragme,
- un second système optique, comprenant un analyseur, pour recueillir la lumière réfléchie par l'échantillon,
- un photodétecteur, monté à la sortie de ce second système optique.

L'un des deux organes de polarisation que constituent le polariseur et l'analyseur est soumis à une rotation connue, en pratique à une rotation à vitesse constante. Il en résulte que la lumière perçue par le photodétecteur est modulée en amplitude à une fréquence double de la vitesse de rotation de cet organe.

Le fonctionnement est rendu monochromatique soit au niveau de la source lumineuse, soit au niveau du photodétecteur. Dans un ellipsomètre spectroscopique, cela signifiera que l'on place le monochromateur variable soit après la source lumineuse, soit avant le photodétecteur.

Enfin, l'appareil connu comprend aussi des moyens électroniques de commande et de traitement, pour mesurer l'amplitude du rayonnement reçu par le photodétecteur, en fonction de l'angle de polarisation, afin d'en déduire des informations sur l'état de surface de l'échantillon, de la manière définie plus haut.

Le principe de ces appareils est simple en apparence. Leur réalisation est cependant très délicate, surtout depuis que l'on a abandonné les sources à laser initiales, pour se tourner vers des sources lumineuses à large bande. Il en a été de même avec le passage de filtres optiques discrets à un monochromateur susceptible d'opérer en continu sur tout le spectre utilisé.

Les problèmes rencontrés sont notamment les suivants :

- lorsque c'est le polariseur, situé du côté de la source lumineuse, qui tourne, tout défaut de polarisation de la source lumineuse vient perturber la mesure; il en est de même dans le cas inverse, où c'est l'analyseur qui tourne : dans ce cas, la sensibilité à la polarisation du photodétecteur, en particulier tout dichroïsme de sa fenêtre d'entrée, perturbe la mesure;
- l'organe tournant, polariseur ou analyseur, produit non seulement un angle de polarisation variable, mais aussi une légère déviation du faisceau, qui vient alors à tourner sur une trajectoire circulaire.

Ce phénomène, compensable pour une seule longueur d'onde, ne peut plus être corrigé dès lors que l'on utilise un monochromateur ajustable sur une large bande optique.

La présente invention vient fournir un ellipsomètre spectroscopique perfectionné, qui permet notamment de résoudre ces problèmes, tout en présentant également d'autres avantages.

Selon l'invention, il est prévu tout d'abord au moins une première fibre optique, soit entre la source lumineuse et le premier système optique, s'il est muni d'un polariseur tournant, soit entre le second système optique et le photodétecteur, si celui-ci est muni d'un analyseur tournant. En d'autres termes, la première fibre optique est montée entre le système optique soumis à polarisation tournante et la source lumineuse ou le photodétecteur, respectivement.

Actuellement, il est estimé nécessaire que la ou les fibres optiques soient du type dit multimode, de manière qu'elles soient intérieurement le siège de plusieurs trajets optiques, afin de réaliser un brassage de polarisation. On compense ainsi, suivant le cas, les anisotropies de polarisation de la source lumineuse, ou celles du photodétecteur, en particulier de sa fenêtre d'entrée, qui est souvent en quartz, donc sujette à biréfringence, pour un photomultiplicateur à comptage de photons opérant en large bande.

Les caractéristiques géométriques de la fibre interviennent dans l'effet de brassage de polarisation. On pense actuellement que la fibre doit posséder une longueur de 1 à 10 mètres environ. Compte tenu de ce brassage de mode, et aussi d'autres impératifs, il est estimé souhaitable que la fibre possède un diamètre de l'ordre de la centaine de micromètres.

Selon une autre caractéristique de l'invention, l'appareil comporte également au moins une seconde fibre optique, entre l'autre système optique et le photodétecteur ou la source lumineuse, respectivement.

Cette solution est avantageuse à divers titres, que l'on développera plus loin.

En pratique, dans un appareil d'ellipsométrie spectroscopique, celui des organes de polarisation qui n'est pas sujet à rotation constante est quand même orientable, en particulier à l'aide d'un moteur pas à pas. Bien que dans ce cas, les effets dus aux polarisations résiduelles soient moins critiques, on tire néanmoins un avantage de l'usage de la seconde fibre optique, lorsqu'on fait varier l'orientation pas à pas.

Dans un premier type d'appareil selon l'invention, la source lumineuse est à large bande, et le photodétecteur est précédé d'un monochromateur, ajustable par les moyens électroniques. Dans ce cas, la première fibre optique est montée entre la source umineuse et le premier système optique, qui est celui muni du polariseur tournant constamment. On remarquera aussi que, lorsque le monochromateur est situé du côté du détecteur, la première fibre optique est du côté de la source.

La seconde fibre optique, placée dans ce cas entre le second système optique et le monochromateur, facilite considérablement la solution du problème de rotation du spot sur un cercle, exposé plus haut. En effet, il suffit alors de faire entrer dans la seconde fibre optique une image couvrant l'enveloppe du mouvement circulaire de ce spot, et de faire entrer dans le monochromateur tout le rayonnement issu de la sortie de la fibre.

Dans un second type d'appareil selon l'invention, le monochromateur est placé entre la source lumineuse à large bande et le premier système optique; la première fibre optique est placée entre le second système optique, muni d'un analyseur tournant, et le photodétecteur. Là encore, on note que lorsque le monochromateur est du côté de la source lumineuse, alors la première fibre optique est du côté du photodétecteur. Toutefois, un agencement différent est possible, aussi bien pour l'appareil du second type que pour l'appareil du premier type précité.

Dans l'appareil du second type, la seconde fibre optique est naturellement placée entre le monochromateur et le premier système optique. Elle joue ici un rôle d'adaptation d'ouverture entre la sortie du monochromateur et le premier système optique, remarque étant faite que lorsque le monochromateur est soumis à un balayage spectral, la direction et le point de départ du faisceau de sortie sont sujets à de légers déplacements.

Dans un mode de réalisation particulier de l'invention, la source lumineuse est une lampe à arc de xénon haute pression; le photodétecteur est un photomultiplicateur à comptage de photons; le monochromateur est du type à double prisme.

Un appareil de ce genre comprend normalement des moyens pour déplacer avec précision l'échantillon relativement aux premier et second systèmes optiques, afin de pouvoir analyser différents points de la surface de l'échantillon.

L'usage des fibres optiques procure aussi l'avantage que la source lumineuse, le monochromateur, le photodétecteur et les moyens électroniques de commande et de traitement (au moins en partie) peuvent être réunis sur un même châssis, donc à distance de l'échantillon.

De plus, plusieurs ensembles constitués d'un échantillon et des deux systèmes optiques, qui peuvent être reliés de façon multiplexée dans le temps, par des fibres optiques, à une partie commune comprenant ce châssis, c'est-à-dire plus généralement la source lumineuse, le monochromateur, le photodétecteur et les moyens électroniques de commande et de traitement.

Jusqu'à présent, on n'avait pas utilisé des fibres optiques à l'intérieur même d'un ellipsomètre spectroscopique, en raison notamment de l'atténuation inéluctable du signal lumineux qui en résulte, compte tenu aussi des contraintes optiques consistant à faire entrer le signal dans la fibre, puis à l'en faire sortir. Il faut bien sûr prendre en compte également la complexité des réglages intervenant dans un ellipsomètre spectroscopique.

La présente invention vient au contraire préconiser l'usage de telles fibres optiques, au moins en un endroit, et de préférence en deux endroits, tout en tirant de ces fibres optiques des avantages qui compensent largement les inconvénients liés à leur usage.

D'autres caractéristiques et avantages de l'invention apparaîtront à l'examen de la description détaillée ci-après, et des dessins annexés, sur lesquels :

- la figure 1 est le schéma de principe d'un ellipsomètre spectroscopique connu;
- la figure 2 est le schéma de principe d'un premier mode de réalisation de l'ellipsomètre spectroscopique selon l'invention; et
- la figure 3 est le schéma de principe d'un second mode de réalisation de l'ellipsomètre spectroscopique selon l'invention.

Les dessins annexés doivent être considérés comme faisant partie intégrante de la description, et pourront le cas éohéant servir à la compléter aussi bien qu'à définir l'invention.

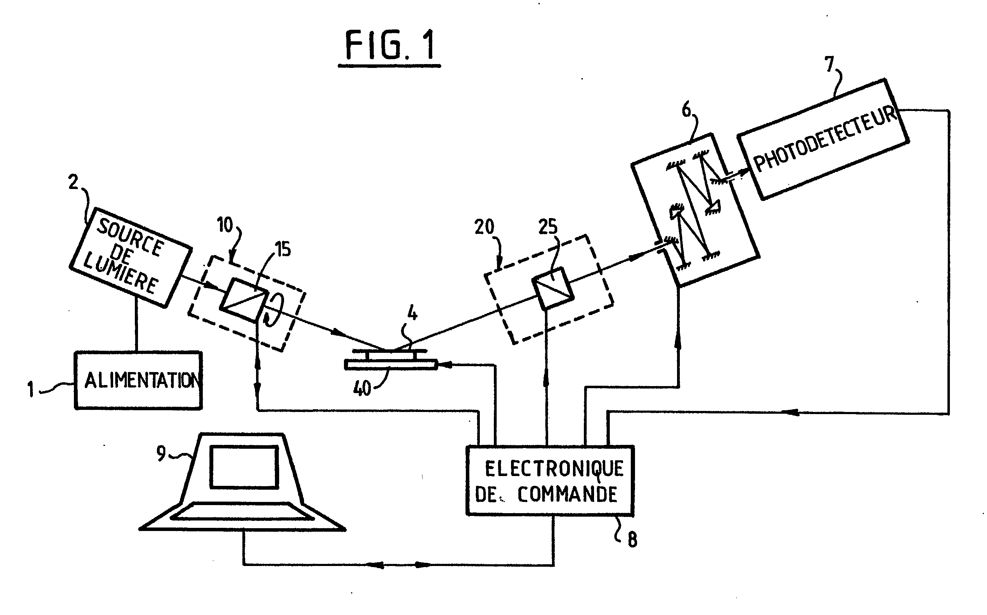

La figure 1 illustre le schéma de principe d'un ellipsomètre spectroscopique de type connu.

Une alimentation 1 excite une source de lumière 2, telle qu'une lampe à arc au xénon haute pression. Un premier système optique 10 comportant un polariseur 15 transforme le faisceau de lumière issu de la source 2 en un faisceau qui frappe l'échantillon 4 monté·sur un porte-objet 40, de préférence mobile suivant deux directions orthogonales, dans un plan parallèle à celui de l'objet.

La lumière utile est celle réfléchie par l'objet, symétriquement du faisceau incident par rapport à une normale à la surface de l'échantillon 4.

Cette lumière réfléchie est reprise par un second système optique 20 comprenant un analyseur 25, pour être appliqué à la fente d'entrée d'un monochromateur 6, qui est ici un monochromateur à double prisme. La lumière issue de la fente de sortie du monochromateur 6 est appliquée à un photodétecteur 7, comportant en principe un photomultiplicateur suivi d'un amplificateur, de manière à permettre un comptage de photons à large bande.

Le montage de la figure 1 correspond, pour l'essentiel, à l'ellipsomètre spectroscopique décrit dans la note précitée du CNET. Le polariseur 15 tourne à une vitesse constante, correspondant par exemple à une fréquence de 40 Hz. L'analyseur 25 est orientable, à une précision d'environ un centième de degré, sous l'action d'un moteur pas à pas.

Une électronique de commande 8 agit :

- sur le polariseur 15, pour en commander la mise en rotation continue,
- sur le plateau 40, pour en commander le positionnement X-Y,
- sur l'analyseur 25, pour en commander l'orientation à travers le moteur pas à pas,
- sur le monochromateur 6, pour en définir la longueur d'onde d'accord,
- enfin, le signal issu du photodétecteur 7 est appliqué au circuit 8, qu'il enregistre en relation avec la rotation du polariseur 15, et des autres données recueillies dont notamment la position de l'échantillon, celle de l'analyseur et la longueur d'onde à laquelle correspond chaque mesure.

Ces informations, éventuellement prétraitées par l'électronique 8,sont transmises à une micro-ordinateur 9, propre à en déduire les informations tangente psi et cosinus delta déjà mentionnées, puis des courbes représentatives de l'état de surface et/ou de la structure multi-couches de l'échantil lon, en fonction de la position frappée à chaque fois par le spot.

L'examen de la figure 1 montre que tous les organes dont la fonction est optique, depuis la source jusqu'au photodétecteur, doivent être dans des positions bien déterminées par rapport à l'échantillon 4. Dans certaines applications,on souhaiterait observer dynamiquement des phénomènes se déroulant à l'intérieur d'un four. La contrainte géométrique ci-dessus énoncée fait que l'ellipsomètre spectoscopique ne le permet pas. Il faut donc sortir à chaque fois l'objet du four, pour le placer sur un porte-objet comme illustré sur la figure 1.

De plus, et surtout, le dispositif de la figure 1 est sensible à la polarisation résiduelle de la source de lumière que constitue la lampe à arc xénon. Il est également sensible au mouvement circulaire subi par le spot sur l'échantillon 4 lors de la rotation du polariseur 15, effet qui est augmenté dans une certaine mesure. par l'analyseur 25, dont on rappelle qu'il est orientable.

La polarisation résiduelle de la source de lumière 2 perturbe la mesure, telle que relevée par l'électronique de commande 8. La rotation circulaire du spot amène à un compromis pour appliquer le faisceau lumineux à l'entrée du monochromateur 6.

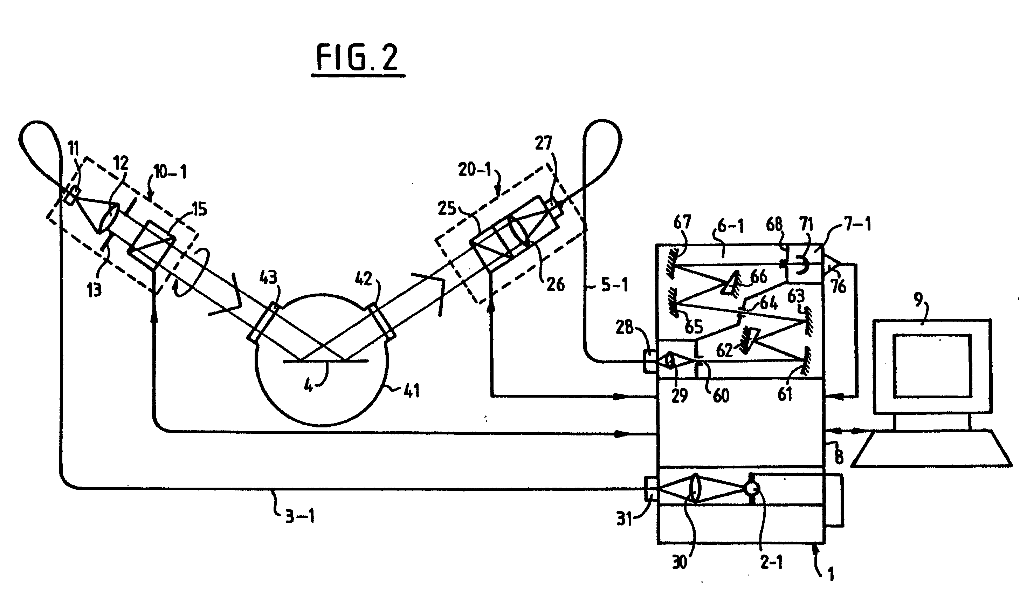

La présente invention va permettre d'améliorer la situation. Un premier mode de réalisation de l'invention est illustré sur la figure 2.

Un châssis unique comprend l'alimentation 1 de la lampe au xénon 2-1, le microprocesseur 8, le monochromateur 6-1, le photomultiplicateur 7-1 et son amplificateur, et le cas échéant le micro-ordinateur 9. Il est souligné au passage que les composants du premier mode de réalisation sont, là où c'est nécessaire, individualisés par le suffixe numérique "1". Ceux du second mode de réalisation le seront par le suffixe numérique "2".

Le rayonnement lumineux de la source 2-1 est transmis par une lentille 30 au coupleur d'entrée 31 de la fibre optique 3-1.

Celle-ci rejoint le système optique 10-1, qui comprend un coupleur de sortie de fibres 11, une lentille 12, un diaphragme de collimation 13, et le polariseur tournant 15.

Le faisceau parallèle issu du polariseur 15 frappe le hublot d'entrée 43 ménagé dans la paroi d'une enceinte 41 contenant l'échantillon 4-1 (par exemple un circuit intégré en cours d'élaboration).

Le rayonnement réfléchi traverse le hublot de sortie 42 ménagé dans la paroi de l'enceinte 41, pour venir frapper l'analyseur 25 des seconds moyens optiques 20-1. Une lentille 26 applique le faisceau traversant le polariseur 25 au coupleur d'entrée 27 de la seconde fibre optique 5-1.

Le coupleur de sortie 28 de cette même fibre optique délivre un rayonnement repris par une lentille 29 pour être appliqué sur la fente d'entrée 60 du monochromateur 6-1. Le monochromateur comprend un premier miroir de renvoi 61, un premier prisme 62, un second miroir de renvoi 63, une fente intermédiaire 64, un autre miroir de renvoi 65, un second prisme 66, encore un autre miroir de renvoi 67, et une fente de sortie 68. En regard de la fente de sortie se trouve le photodétecteur 7-1, qui comprend le photomultiplcateur 71 et l'amplificateur 76. La sortie de l'amplificateur 76 va vers l'électronique de commande 8 à microprocesseur, qui est reliée au micro-ordinateur 9.

La présence en 41 d'une enceinte montre que ce montage est utilisable pour l'observation dynamique de phénomènes. A cet égard, on observe que les fibres optiques permettent une grande souplesse, puisque la plupart des éléments sensibles notamment à la chaleur peuvent être reportés à distance dans le châssis unique mentionné.

La fibre optique 3-1, qui possède une longueur de 2 mètres par exemple, pour un diamètre de 200 microns, est une fibre unique multimode, du type à saut d'indice ou à gradient d'indice.

Il a été observé qu'une telle fibre atténue considérablement ou même fait disparaître les défauts de polarisation dus à la lampe au xénon 2-1.

Les coupleurs de fibres optiques tels que 31, 11, 27 et 28 sont par exemple des connecteurs vendus par la Société française Alliance Technique Internationale (A.T.I.).

Il a été observé que, de cette manière, on tire des avantages considérables de la présence de fibres optiques dans le montage, malgré les préjugés antérieurs défavorables, sans que l'atténuation apportée par les fibres ne soit prohibitive. Les avantages obtenus en termes de rapport signal/bruit sont en faveur de la présence des fibres optiques, par rapport aux montages antérieurement connus.

La fibre optique 5-1, pour sa part, peut recevoir l'ensemble du rayonnement réfléchi par l'échantillon 4-1, compte tenu de la rotation subie par le spot sous l'effet de la rotation de l'analyseur 15, et de la nouvelle déflexion introduite par l'analyseur 251 suffit en effet de focaliser l'ensemble du rayonnement sur le coupleur d'entrée 27 de la fibre optique, de façon que toute la zone intéressée par ces phénomènes de rotation voie son rayonnement lumineux entrer dans la fibre optique 5-1. A l'autre extrémité, le coupleur 28 permet alors, à travers la lentille 29, d'introduire à coup sûr la plus grande partie du rayonnement utile à l'intérieur du monochromateur 6-1, par sa fente d'entrée 60 et ce de façon fixe en direction. De ce fait, là encore, l'atténuation due à l'usage d'une fibre optique assez longue peut être largement compensée par l'augmentation du niveau du signal utile résultant du montage selon l'invention.

L'exploitation des signaux par le microprocesseur 8 et le micro-ordinateur 9 peut se faire de la manière connue, remarque étant fait que l'on obtient maintenant des signaux permettant de suivre dynamiquement un phénomène en cours.

Pour certaines applications, le montage de la figure 1 peut être inversé, c'est-à-dire que c'est le polariseur 15 qui est orientable par un moteur pas à pas, tandis que l'analyseur 25 est mû en rotation continue.

De même, dans certains cas, il peut être intéressant de placer le monochromateur 6-1 entre la source et la fibre optique 3-1, plutôt qu'à côté du photodétecteur 7-1.

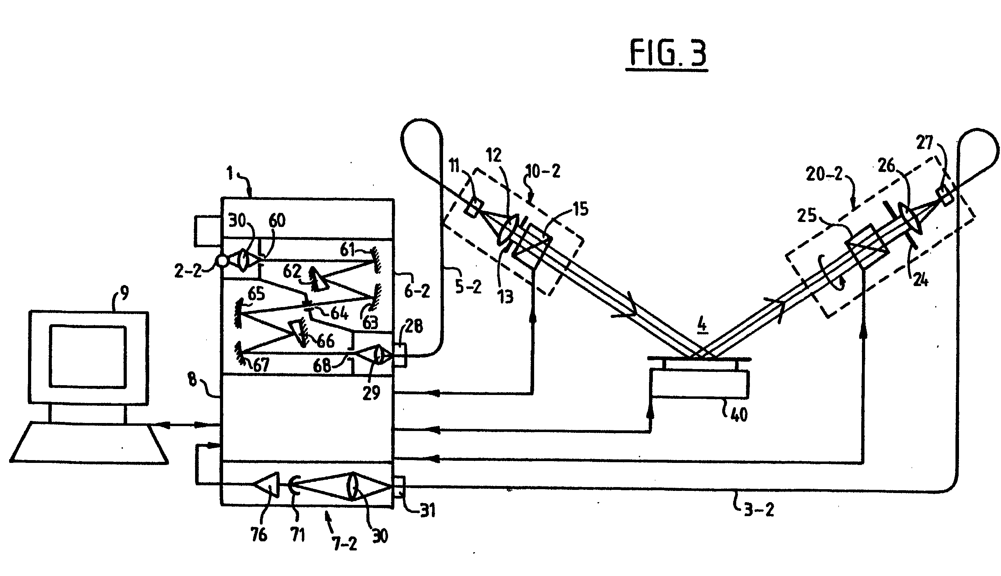

C'est tout particulièrement le cas dans les applications de cartographie X-Y d'un échantillon, qui est maintenant exploré statiquement. On décrira maintenant en référence à la figure 3 un second mode de réalisation de l'invention qui convient bien pour une telle application.

Pour faciliter la compréhension, il a paru préférable de laisser inchangé le trajet optique des rayons lumineux, ce qui, compte tenu de la symétrie déjà relevée entre les montages des figures 2 et 3, amène à placer le châssis et le micro-ordinateur 9 à gauche de cette figure 3.

Comme précédemment, le châssis comprend l'alimentation 1 de la source au xénon 2-2, le monochromateur 6-2, l'électronique de commande à microprocesseur 8, et le photodétecteur 7-2.

Comme sur la figure 1, l'échantillon 4 est placé sur un porte-objet 40 mobile en X et en Y dans un plan parallèle à la surfce de l'échantillon.

Plus précisément, le rayonnement émis par la source 2-2 est repris par une lentille 30, qui l'applique à la fente d'entrée 60 du monochromateur 6-2. Pour le reste, celui-ci est constitué comme le monochromateur 6-1.

Sa fente de sortie 68 illumine une lentille 29 qui en constitue une image sur le coupleur d'entrée 28 de la seconde fibre optique 5-2.

Les contraintes de longueurs de diamètres et de constitution des fibres optiques sont les mêmes que précédemment.

La sortie de la fibre optique 5-2 frappe par un coupleur 11 la lentille 12 du premier système optique 10-2. Cette lentille est suivie d'un diaphragme 13 qui collimate le faisceau avant qu'il ne frappe le polariseur 15, orientable sous l'effet d'un moteur pas à pas.

Le faisceau réfléchi par l'échantillon frappe l'analyseur 25 du second système optique. Cet analyseur est suivi d'un diaphragme 24, puis d'une lentille 26 dont le faisceau de sortie frappe le coupleur d'entrée 27 de la première fibre optique 3-2.

Le coupleur de sortie 31 de cette fibre 3-2 est en regard d'une lentille 30 qui en forme une image sur la fenêtre d'entrée du détecteur. Plus précisément, cette fenêtre d'entrée est celle d'un photomultiplicateur 71, suivi de l'amplificateur 76 relié au microprocesseur 8.

La première fibre optique 3-2, située du côté de l'analyseur tournant 25, a pour effet d'atténuer ou de supprimer complètement les conséquences néfastes pour la mesure de tout défaut de polarisation que peut comporter la fenêtre d'entrée en quartz du photomultiplicateur 71.

La seconde fibre optique 5-2, de son côté, permet de s'accomoder sans difficulté des petites variations de position ou de direction du faisceau de sortie passant par la fente 68 du monochromateur 6-2. Il suffit en effet de faire en sorte qu'en toute circonstance ce faisceau frappe bien le coupleur 28, auquel cas on est sûr que le faisceau incident (monochromatique dans ce mode de réalisation) va bien tout entier être reçu par le premier système optique 10-2, donc intégralement et de façon fixe en direction, utilisé pour la réflexion sur l'échantillon.

Comme précédemment, on tire donc en fait des avantages de la présence des fibres optiques, au lieu des inconvénients que l'on pouvait atendre du fait de l'atténuation liée à la présence de celles-ci, ainsi qu'à leur coupleur d'entrée et de sortie.

De façon générale, avec des polariseurs en calcite, et les autres constituants déjà mentionnés, on peut opérer dans une bande spectrale allant de 230 à 930 nanomètres environ, ou même plus haut jusqu'à 3 micromètres, hormis le photomultiplicateur, remplacé par d'autres détecteurs infra-rouge car on ne dispose pas actuellement de photomultiplicateur propre à un comptage de photons et opération au-delà de 1,1 micromètre.

Comme déjà indiqué, il est estimé actuellement souhaitable que la fibre optique soit d'une longueur au moins égale à 1 mètre, de préférence environ 2 mètres, et pouvant aller jusqu'à 10 mètres ou plus.

Le diamètre de la fibre optique est de préférence de l'ordre de 200 microns, du moins si le monochromateur possède une ouverture de F/8 environ alors que la fibre possède une ouverture de F/2. L'optique intermédiaire doit alors posséder un grandissement de 4. Une fibre de diamètre 200 microns produit ainsi une tache de 800 microns, dont la majeure partie va pouvoir rentrer dans une fente d'entrée de monochromateur.

A l'opposé, un diamètre de fibres de 200 microns s'est avéré propre à permettre l'entrée de tout le signal utile dans la fibre, même compte tenu des mouvements de la tache dus à la rotation de polarisation.

En ce qui concerne la longueur de la fibre, il peut être utile de se rapprocher de la limite inférieure, si l'on souhaite travailler dans l'ultra-violet.

Les meilleures précisions que l'on obtient avec les appareils selon l'invention ne sont pas seulement importantes en elles-mêmes. En effet, l'exploitation ultérieure des signaux d'ellipsométrie spectroscopique fait intervenir une technique de modélisation, c'est-à-dire que l'on établit une courbe modèle correspondant à une structure estimée de la surface de l'échantillon, et que l'on cherche à faire corréler cette courbe modèle avec les points de mesure réels obtenus sur tout le spectre. L'homme de l'art sait qu'en pareil cas, la qualité de la modélisation est largement tributaire de la fiabilité des signaux de mesure acquis.

De plus, l'invention facilite aussi une autre technique de mesure d'ellipsométrie spectroscopique, qui consiste à faire de la poursuite ou "tracking". Suivant cette technique, au lieu de laisser l'analyseur ou le polariseur orientable en position fixe pendant toute une série de mesures, on le déplace à chaque longueur d'onde, pour l'amener dans les conditions optimales de mesure. Cette technique était très difficile à mettre en oeuvre avec les dispositifs de la technique antérieure.

Dans le mode de réalisation de la figure 3, différents points de la surface de l'objet sont analysables par déplacement du porte-objet 40. Dans le mode de réalisation de la figure 2, il est envisageable de faire de même, mais en déplaçant cette fois les systèmes optiques 10-1 et 20-1. On remarquera qu'un tel déplacement, rendu possible avec les fibres optiques, ne l'était pas dans le cas du mode de réalisation de la figure 1, de même la possibilité de changer l'angle d'incidence.

Dès lors que les constituants essentiels et les plus onéreux de l'appareil d'ellipsométrie spectroscopique sont réunis dans un même châssis, il devient également possible d'utiliser tous ces éléments, y compris le micro-ordinateur 9, de manière commune, pour plusieurs ensembles de mesures comprenant chacun l'échantillon et le porte-échantillon, on bien l'échantillon dans son four, ainsi que les deux systèmes optiques 10 et 20, et bien entendu les fibres 3 et 5.

Il suffit en effet simplement de mutliplier les connexions électriques, les commandes étant multiplexées dans le temps et d'amener les fibres optiques en coopération multiplexée avec la source 2, et enfin de mettre côte à côte les fibres optiques devant la fente d'entrée 60 du monochromateur, dont la grande longueur s'y prête particulièrement bien. Ceci intéresse le montage de la figure 2. La même chose est naturellement possible avec celui de la figure 3.

Enfin, on note encore que les dispositifs des figures 2 et 3 sont pratiquement symétriques, sur le plan optique. Il est donc concevable de construire un appareil capable de fonctionner, simultanément ou en mode multiplexé, à la fois selon le mode de réalisation de la figure 2, et selon celui de la figure 3.

**Revendications**

1. Appareil d'ellipsométrie spectroscopique comprenant:
   – un source lumineuse (2),
   – un premier système optique (10), comprenant un polariseur (15), pour illuminer un échantillon (4), sous incidence oblique, par un faisceau de lumière polarisée,
   – un second système optique (20), comprenant un analyseur (25), pour recueillir la lumière réfléchie par l'échantillon,
   – un photodétecteur (7), monté à la sortie de ce second système optique,
   – l'un des deux organes de polarisation, que constitue le polariseur (15) ou l'analyseur (25) étant soumis à une rotation à vitesse connue,
   – des moyens (6) pour permettre une sélection spectrale de la lumière incidente ou pour permettre une analyse spectrale de la lumière réfléchie,
   – des moyens électroniques de commande et de traitement (8, 9) pour mesurer l'amplitude du rayonnement reçu par le photodétecteur, en fonction de l'angle de polarisation, afin d'en déduire des informations sur l'état de surface de l'échantillon, caractérisé en ce qu'il est prévu au moins une première fibre optique (3-1, 3-2) du type multimode entre le système optique (10-1; 20-2) soumis à polarisation tournante et la source lumineuse (2-1) ou le photodétecteur (7-2) respectivement.

2. Appareil selon la revendication 1, caractérisé en ce qu'il comporte également au moins une seconde fibre optique (5-1; 5-2) du type multimode entre l'autre système optique (20-2; 10-2) et le photodétecteur (7-1) ou la source lumineuse (2-2), respectivement.

3. Appareil selon l'une des revendications 1 et 2, caractérisé en ce que la ou les fibres optiques (3, 5) possèdent un diamètre de l'ordre de la centaine de micromètres, pour une longueur de 1 à 10 mètres.

4. Appareil selon l'une des revendications précédentes, caractérisé en ce que celui (20-1; 10-2) des organes de polarisation qui n'est pas sujet à ladite rotation est orientable, en particulier à l'aide d'un moteur pas à pas.

5. Appareil selon l'une des revendications précédentes, caractérisé en ce que la source lumineuse (2) est à large bande, en ce que le photodétecteur (7-1) est précédé d'un monochromateur (6-1) ajustable par les moyens électroniques, et en ce que la première fibre optique (3-1) est montée entre la source lumineuse (2-1) et le premier système optique (10-1) à polariseur tournant.

6. Appareil selon la revendication 5, caractérisé en ce que la seconde fibre optique (5-1) est placée entre le second système optique (20-1) et le monochromateur (7-1).

7. Appareil selon l'une des revendications 1 à 4, caractérisé en ce qu'un monochromateur (6-2) est placé entre la source lumineuse (2-2) et le premier système optique (10-2), et en ce que la première fibre optique (3-2) est placée entre le second système optique (20-2) à analyseur tournant, et le photodétecteur (7-2).

8. Appareil selon la revendication 8, caractérisé en ce que la seconde fibre optique (5-2) est placée entre le monochromateur (6-2) et le premier système optique (10-2).

9. Appareil selon l'une des revendications précédentes, caractérisé en ce que la source lumineuse (2) est une lampe à arc de xénon, et en ce que le photodétecteur (7) est un photomultiplicateur à comptage de photons.

10. Appareil selon l'une des revendications précédentes, caractérisé en ce qu'il comprend un monochromateur à double prisme.

11. Appareil selon l'une des revendications précédentes, caractérisé en ce qu'il comprend des moyens (40) pour déplacer avec précision l'échantillon relativement aux premier et second systèmes optiques.

12. Appareil selon l'une des revendications précédentes, caractérisé en ce que la source lumineuse (2), le monochromateur (6), le photodétecteur (7) et les moyens électroniques de commande et de traitement (8, 9) sont réunis sur un même châssis.

13. Appareil selon l'une des revendications précédentes, caractérisé en ce que plusieurs ensembles échantillons et systèmes optiques sont reliés de façon multiplexée dans le temps, par des fibres optiques, à une partie commune comprenant la source lumineuse (2), le monochromateur (6), le photodétecteur (7) et les moyens électroniques de commande et de traitement (8, 9).

**Claims**

1. Spectroscopic ellipsometry apparatus, comprising:
a light source (2),
a first optical system (10) including
a polariser (15) for illuminating a sample (4) with a beam of polarised light at a sloping incidence,
a second optical system (20) including an analyser (25) for picking up the light reflected from the sample,
a photodetector (7) mounted at the exit from said second optical system,
one of the two polarising members constituted by the polariser and by the analyser being subjected to rotation at a known speed,
means (6) to permit spectral selection of the incedent light or to permit spectral analysis of the reflected light, and
control and processing electronic means (8, 9) for measuring the amplitude of the radiation received by the photodetector as a function of the angle of polarisation in order to deduce information concerning the surface state of the sample, characterised in that there is provided at least one first optical fibre (3-1, 3-2) of the multi-mode type disposed between the optical system (10-1, 10-2) subjected to rotating polarisation and the light source (2-1) or photodetector (7-2) respectively.

2. Apparatus according to claim 1, characterised in that it further includes at least one second optical fibre (5-1, 5-2) disposed between the other optical system (20-1, 10-2) and the photodetector (7-1) or light source (2-2) respectively.

3. Apparatus according to claim 1 or 2 characterised in that the, or each, optical fibre (3, 5) has a diameter of about 100 micrometers for a length of 1 meter to 10 meters.

4. Apparatus according to any preceding claim characterised in that the one (20-1, 10-2) of the polarising members which is not subjected to said rotation is orientable, in particular by means of a stepper motor.

5. Apparatus according to any preceding claim characterised in that the light source (2) is a wideband source, in that the photodetector (7-1) is preceded by a monochromator (6-1) which is adjustable by the electronic means, and in that the first optical fibre is mounted between the light source (2-1) and the first optical system including the rotating polariser.

6. Apparatus according to claim 5, characterised in that the second optical fibre (5-1) is placed between the second optical system (20-1) and the monochromator (7-1).

7. Apparatus according to any one of claims 1-4, characterised in that a monochromator (6-2) is placed between the light source (2-2) and the first optical system (10-2), and in that the first optical fibre (5-1) is placed between the second optical system (20-2) including the rotating analyser, and the photodetector (7-2).

8. Apparatus according to claim 7, characterised in that the second optical fibre (5-2) is placed between the monochromator (6-2) and the first optical system (10-2).

9. Apparatus according to any preceding claim, characterised in that the light source (2) is a xenon arc lamp, and in that the photodetector (7) is a photon counting photomultiplier.

10. Apparatus according to any preceding claim, characterised in that it includes a two-prism monochromator.

11. Apparatus according to any preceding claim, characterised in that it includes means (40) for accurately displacing the sample relative to the said first and second optical systems.

12. Apparatus according to any preceding claim, characterised in that the light source (2), the monochromator (6), the photodetector (7) and, the control and processing electronic means (8, 9) are located on a common chassis.

13. Apparatus according to any preceding claim, characterised in that a plurality of sample assemblies and optical systems are connected in time multiplexed manner by optical fibre to a common portion including the light source (2), the monochromator (6), the photodetector (7) and the control and processing electronic means (8, 9).

## Patentansprüche

1. Vorrichtung zur spektroskopischen Messung der Elliptizität, die folgende Einrichtungen aufweist:
- eine Lichtquelle (2),
- eine erste Optik (10) mit einem Polarisationsfilter (15) zur Beleuchtung einer Probe (4) mittels eines polarisierten Lichtbündels unter schrägem Lichteinfall,
- eine zweite Optik (20) mit einem Analysator (25) zur Erfassung des von der Probe reflektierten Lichts,
- eine lichtempfindliche Zelle (7), die am Eingang der zweiten Optik angeordnet ist,
- wobei einem der beiden Polarisationselemente, das das Polarisationsfilter (15) bzw. den Analysator (25) bildet, zu einer Drehbewegung mit bekannter Drehgeschwindigkeit veranlaßt wird,
- Einrichtungen (6), die eine spektrale Selektion des einfallenden Lichts beziehungsweise eine Spektralanalyse des reflektierten Lichts gestatten,
- elektronische Steuer- und Verarbeitungseinrichtungen (8, 9) zum Messen der Amplitude der von der lichtempfindlichen Zelle empfangenen Strahlung in Abhängigkeit von Polarisationswinkel, um daraus Informationen über den Zustand der Probenoberfläche abzuleiten, dadurch gekennzeichnet, daß mindestens ein Lichtwellenleiter (3-1, 3-2) vom Mehrfachwellentyp zwischen der einer Rotationspolarisation unterzogenen Optik (10-1; 20-2) und der Lichtquelle (2-1) bzw. der lichtempfindlichen Zelle (7-2) angeordnet ist.

2. Vorrichtung nach Anspruch 1, dadurch gekennzeichnet, daß sie außerdem mindestens einen zweiten Lichtwellenleiter (5-1; 5-2) vom Mehrfachwellentyp zwischen der anderen Optik (20-1; 10-2) und der lichtempfindlichen Zelle (7-1) bzw. der Lichtquelle (2-2) aufweist.

3. Vorrichtung nach einem der Ansprüche 1 und 2, dadurch gekennzeichnet, daß der bzw. die Lichtwellenleiter (3, 5) einen Durchmesser in der Größenordnung von rund 100 µm bei einer Länge zwischen 1 und 10 Meter aufweist bzw. aufweisen.

4. Vorrichtung nach einem der vorhergehenden Ansprüche, dadurch gekennzeichnet, daß dasjenige (20-1; 10-2) der beiden Polarisationselemente, das nicht zu einer Drehbewegung veranlaßt wird, schwenkbar ist, insbesondere mittels eines Schrittmotors.

5. Vorrichtung nach einem der vorhergehenden Ansprüche, dadurch gekennzeichnet, daß die Lichtquelle (2) Breitbandcharakteristik aufweist, daß der lichtempfindlichen Zelle (7-1) ein mittels der elektronischen Einrichtungen einstellbarer Monochromator (6-1) vorgeschaltet ist, und daß der erste Lichtwellenleiter (3-1) zwischen der Lichtquelle (2-1) und der ersten Optik (10-1) mit Rotationspolarisation angeordnet ist.

6. Vorrichtung nach Anspruch 5, dadurch gekennzeichnet, daß der zweite Lichtwellenleiter (5-1) zwischen der zweiten Optik (20-1) und dem Monochromator (7-1) angeordnet ist.

7. Vorrichtung nach einem der Ansprüche 1 bis 4, dadurch gekennzeichnet, daß zwischen die Lichtquelle (2-2) und die ersten Optik (10-2) ein Monochromator (6-2) geschaltet ist, und daß der erste Lichtwellenleiter (3-2) zwischen der zweiten Optik (20-2) mit Rotationsanalysator und der lichtempfindlichen Zelle (7-2) angeordnet ist.

8. Vorrichtung nach Anspruch 7, dadurch gekennzeichnet, daß der zweite Lichtwellenleiter (5-2) zwischen den Monochromator (6-2) und die erste Optik (10-2) geschaltet ist.

9. Vorrichtung nach einem der vorhergehenden Ansprüche, dadurch gekennzeichnet, daß die Lichtquelle (2) eine Xenonbogenlichtlampe ist und daß die lichtempfindliche Zelle (7) eine Photomultiplikatorröhre zur Photonenzählung ist.

10. Vorrichtung nach einem der vorhergehenden Ansprüche, dadurch gekennzeichnet, daß sie einem Monochromator mit Doppelprisma aufweist.

11. Vorrichtung nach einem der vorhergehenden Ansprüche, dadurch gekennzeichnet, daß sie Einrichtungen (40) zur präzisen Lageveränderung der Probe gegenüber der ersten und zweiten Optik aufweist.

12. Vorrichtung nach einem der vorhergehenden Ansprüche, dadurch gekennzeichnet, daß die Lichtquelle (2), der Monochromator (6), die lichtempfindliche Zelle (7) und die elektronischen Steuer- und Verarbeitungseinrichtungen (8, 9) zusammen auf demselben Träger angeordnet ist.

13. Vorrichtung nach einem der vorhergehenden Ansprüche, dadurch gekennzeichnet, daß mehrere Probengruppen und Optikgruppen in Zeitmultiplextechnik mittels Lichtwellenleitern mit einem gemeinsamen Teil verbunden sind, welches die Lichtquelle (2), den Monochromator (6), die lichtempfindliche Zelle (7) und die elektronischen Steuer- und Verarbeitungseinrichtungen (8, 9) umfaßt.

# FIG. 1

EP 0 237 415 B1

# FIG.2

EP 0 237 415 B1

## FIG.3